# EUROPÄISCHE PATENTANMELDUNG

(11) **EP 1 544 605 A2**
(43) Veröffentlichungstag der Anmeldung: **22.06.2005**
(21) Anmeldenummer: 04026627.2
(22) Anmeldetag: 10.11.2004
(51) Int. Cl.: G01N 21/952

(54) **Verfahren und Vorrichtung zum Überprüfen eines Gewindes eines Verbindungselements auf Beschädigungen**

(30) Priorität: 19.12.2003 DE 10359837
(71) Anmelder: Kamax-Werke Rudolf Kellermann GmbH & Co. KG, 37520 Osterode am Harz (DE)
(72) Erfinder: Hartmann, Gunther, Dr., 36304 Alsfeld (DE); Deeg, Wolfgang, 35315 Homberg/Ohm (DE); Hohl, Jürgen, 35274 Kirchhain (DE)
(74) Vertreter: Rehberg Hüppe + Partner

(57) **Zusammenfassung**

Ein Verfahren zum Überprüfen eines Gewindes (2) eines Verbindungselements (3) auf Beschädigungen weist die folgenden Schritte auf: Abstrahlen von Lichtstrahlen auf das Gewinde (2) derart, dass diese im Wesentlichen senkrecht zu einer Flanke (17) des Gewindes (2) verlaufen und Auffangen der von der Flanke (17) des Gewindes (2) reflektierten Lichtstrahlen im Wesentlichen senkrecht zu der Flanke (17) des Gewindes (2). Eine Vorrichtung (1) zum Überprüfen eines Gewindes (2) eines Verbindungselements (3) auf Beschädigungen besitzt mindestens eine Beleuchtungseinrichtung (9) zum Beleuchten des zu überprüfenden Verbindungselements (3), wobei die Beleuchtungseinrichtung (9) derart relativ zu dem Verbindungselement (3) ausgerichtet ist, dass die Lichtstrahlen im Wesentlichen senkrecht zu einer Flanke (17) des Gewindes (2) abgestrahlt werden und mindestens einer Auffangoptik (18) zum Auffangen der von der Flanke (17) des Gewindes (2) reflektierten Lichtstrahlen, wobei die Auffangoptik (18) derart relativ zu dem Verbindungselement (3) ausgerichtet ist, dass im Wesentlichen die senkrecht zu der Flanke (17) des Gewindes (2) reflektierten Lichtstrahlen aufgefangen werden.

## Beschreibung

Die Erfindung betrifft ein Verfahren und eine Vorrichtung zum Überprüfen eines Gewindes eines Verbindungselements auf Beschädigungen. Bei dem Verbindungselement handelt es sich vorzugsweise um eine Schraube oder eine Mutter.

### STAND DER TECHNIK

Aus der **DE *101 40 374 A1*** sind ein Verfahren und eine Vorrichtung zum Überprüfen eines Gewindes eines Verbindungselements auf Beschädigungen bekannt. Die Vorrichtung weist eine Matrixkamera, ein Objektiv mit vorgesetzter Strahllenkungsoptik, eine Bildauswerteeinheit und einen Monitor auf. Das zu überprüfende Verbindungselement wird mittels einer Ringleuchte rundum gleichmäßig beleuchtet. Die optische Achse der Matrixkamera, des Objektivs sowie der Ringleuchte stimmen mit der Schraubenachse des Verbindungselements überein. Dies bedeutet, dass das an dem Verbindungselement angeordnete Gewinde in Achsrichtung diffus beleuchtet wird. Dies führt dazu, dass Licht sowohl von unbeschädigten Bereichen als auch von beschädigten Bereichen des Gewindes zurück in die Kamera reflektiert wird. Hierdurch weisen die mittels der Strahllenkungsoptik in die Matrixkamera abgebildeten unbeschädigten und beschädigten Bereiche nur geringe Unterschiede betreffend Helligkeit und Kontrast auf. Es ergibt sich der Nachteil, dass bei der Auswertung der Prüfergebnisse unbeschädigte und beschädigte Bereiche des Gewindes nur schwierig voneinander zu unterscheiden sind, wodurch die Zuverlässigkeit des Prüfverfahrens beeinträchtigt wird. Ein weiterer Nachteil des bekannten Verfahrens ist es, dass die für die Funktion des Verbindungselements unwesentliche, der Kamera zugewandte Endfläche des Verbindungselements in jedem Fall im auszuwertenden Kamerabild abgebildet wird. Dadurch steht in der Kamera weniger Fläche für die abzubildende Mantelfläche des Verbindungselements zur Verfügung. Wegen der begrenzten Auflösung der Kamera resultiert hieraus eine vergleichsweise schlechte Auflösung.

Im Übrigen ist es bei der zentrischen Anordnung von Matrixkamera, Objektiv und Ringleuchte erforderlich, das zu prüfende Verbindungselement genau relativ zu diesen zu positionieren, damit in der Abbildung die gewünschte kreisförmige Ausbildung anstelle einer elliptischen Ausbildung entsteht.

### AUFGABE DER ERFINDUNG

Der Erfindung liegt die Aufgabe zugrunde, ein Verfahren und eine Vorrichtung zum Überprüfen eines Gewindes eines Verbindungselements auf Beschädigungen bereitzustellen, mit denen beschädigte Flächen bei hohen Prüfgeschwindigkeiten verlässlich von unbeschädigten Flächen unterschieden werden können.

### LÖSUNG

Die Aufgabe der Erfindung wird erfindungsgemäß durch ein Verfahren mit den Merkmalen des unabhängigen Patentanspruchs 1 sowie eine Vorrichtung mit den Merkmalen des unabhängigen Patentanspruchs 9 gelöst.

### BESCHREIBUNG DER ERFINDUNG

Das erfindungsgemäße Verfahren zum Überprüfen eines Gewindes eines Verbindungselements auf Beschädigungen weist die folgenden Schritte auf: Abstrahlen von Lichtstrahlen auf das Gewinde derart, dass diese im Wesentlichen senkrecht zu einer Flanke des Gewindes verlaufen und Auffangen der von der Flanke des Gewindes reflektierten Lichtstrahlen im Wesentlichen senkrecht zu der Flanke des Gewindes mit mindestens einer Auffangoptik, deren optische Achse im Wesentlichen senkrecht zu der Flanke des Gewindes ausgerichtet ist.

Die erfindungsgemäße Vorrichtung zum Überprüfen eines Gewindes eines Verbindungselements auf Beschädigungen besitzt mindestens einer Beleuchtungseinrichtung zum Beleuchten des zu überprüfenden Verbindungselements, wobei die Beleuchtungseinrichtung derart relativ zu dem Verbindungselement ausgerichtet ist, dass die Lichtstrahlen im Wesentlichen senkrecht zu einer Flanke des Gewindes abgestrahlt werden und mindestens einer Auffangoptik zum Auffangen der von der Flanke des Gewindes reflektierten Lichtstrahlen, wobei die optische Achse der Auffangoptik im Wesentlichen senkrecht zu der Flanke des Gewindes und die Auffangoptik derart relativ zu dem Verbindungselement ausgerichtet ist, dass im Wesentlichen die senkrecht zu der Flanke des Gewindes reflektierten Lichtstrahlen aufgefangen werden.

Mit dem erfindungsgemäßen Verfahren und der erfindungsgemäßen Vorrichtung zum Überprüfen eines Gewindes eines Verbindungselements auf Beschädigungen ist es möglich, bei hohen Prüfgeschwindigkeiten - insbesondere Prüfgeschwindigkeiten von mehr als etwa 300 Stück pro Minute - verlässlich festzustellen, ob Beschädigungen des Gewindes des zu prüfenden Verbindungselements vorliegen oder nicht. Diese hohen Prüfgeschwindigkeiten sind u. a. möglich, da die zu prüfenden Verbindungselemente bei dem neuen Verfahren nicht gedreht werden müssen. Je nach Ergebnis der Prüfung wird das Verbindungselement dann als Gutteil oder Schlechtteil eingestuft und dem entsprechenden Materialfluss zugeordnet.

Die Erfindung beruht auf dem Konzept, die zur Beleuchtung des Gewindes dienenden Lichtstrahlen nicht mehr diffus, sondern im Wesentlichen senkrecht zu einer Flanke des Gewindes abzustrahlen und die reflektierten Lichtstrahlen in derselben Richtung aufzufangen. Da Beschädigungen des Gewindes eines Verbindungselements vornehmlich im Bereich der Flanke des Gewindes auftreten, ist dies der für die Prüfung maßgebliche Bereich. Da Lichtstrahlen bekanntlich stets nach dem Prinzip "Einfallswinkel = Ausfallswinkel" von Objekten reflektiert werden, reflektiert eine unbeschädigte Flanke des Gewindes die senkrecht zu dieser abgestrahlten Lichtstrahlen zurück in die erfindungsgemäß in dieser Richtung angeordnete Auffangoptik. Dies führt dazu, dass dieser unbeschädigte Bereich der Flanke des Gewindes in der gewonnenen Abbildung einen vergleichsweise großen Helligkeitswert besitzt. Ist an dieser Stelle der Flanke hingegen eine Beschädigung vorhanden, bedeutet dies, dass die beschädigte Fläche einen vom Winkel der unbeschädigten Flanke abweichenden Winkel besitzt. Das auf eine solche beschädigte Fläche abgestrahlte Licht wird also nur zu geringeren Teilen in die Auffangoptik reflektiert. Damit besitzt die diese beschädigte Fläche zeigende Abbildung einen geringeren Helligkeitswert, d. h. die beschädigte Fläche ist in der Abbildung als dunkler Bereich gut erkennbar.

Die in dieser Weise aufgefangenen reflektierten Lichtstrahlen werden vorzugsweise mit mindestens einer Kamera aufgenommen. Die mindestens eine Kamera ist vorzugsweise mit mindestens einer Auswerteeinheit verbunden, die das mindestens eine aufgenommene Bild bewertet und anhand vorgegebener Kriterien eine Gut-/Schlechtbewertung vornimmt. Vorzugsweise wird genau eine Auswerteeinheit eingesetzt. Bei der Verwendung mehrerer Kameras kann es sich jedoch auch als vorteilhaft erweisen, mehrere Auswerteeinheiten einzusetzen. Letztendlich wird eine einzige Gesamtbewertung des Prüfergebnisses erzeugt. Dafür gibt die Auswerteeinheit nach der Verarbeitung der reflektierten Lichtstrahlen ein entsprechendes Gut-/Schlechtsignal ab, welches beispielsweise zur Steuerung eines Auswerfers für das Verbindungselement verwendet wird. Das neue Verfahren erfordert keine Verwendung einer separaten Strahllenkungsoptik zur Umleitung der reflektierten Lichtstrahlen in die Kamera, da sich die Kameras bereits in der erforderlichen Ausrichtung zu den reflektierten Lichtstrahlen befinden. Dementsprechend gibt es auch keine Verzerrungen, wie sie von Strahllenkungsoptiken erzeugt werden. Der Abstand zwischen den Verbindungselementen und den Kameras kann im Vergleich zum Stand der Technik größer gewählt werden, was die Montage und den Betrieb der Vorrichtung vereinfacht. So kann der Abstand z. B. mindestens etwa 10 cm, vorzugsweise etwa 20 cm oder mehr betragen.

Die Vorrichtung wird vorzugsweise in einen Automaten eingebaut, der die zu prüfenden Verbindungselemente vereinzelt zuführt und in geeigneter Weise vor den Auffangoptiken positioniert. Die erfolgte Positionierung des jeweiligen Verbindungselements wird der Auswerteeinheit durch ein Signal angezeigt. Daraufhin beginnt der Prüfvorgang. Nach erfolgtem Prüfvorgang wird das geprüfte Verbindungselement abtransportiert und in Abhängigkeit von dem von der Auswerteeinheit erzeugten Signal entweder als Gutteil oder als Schlechtteil eingeordnet und entsprechend von der jeweiligen anderen Kategorie von Verbindungselementen getrennt. Bei einer entsprechend hohen Verarbeitungsgeschwindigkeit der Auswerteeinheit kann das gesamte Verfahren kontinuierlich ablaufen, d. h. es ist nicht notwendig, dass das zu prüfende Verbindungselement vor der Aufnahmeoptik zum Stillstand kommt. Hierdurch lassen sich mit dem neuen Verfahren und der Vorrichtung besonders hohe Prüfdurchsätze erzeugen.

Selbstverständlich ist es auch möglich, die neue Vorrichtung gemeinsam mit weiteren neuen Vorrichtungen oder auch Vorrichtungen nach dem Stand der Technik in einem Automaten einzusetzen. Beispielsweise kann die neue Vorrichtung mit einer bekannten Vorrichtung zur dimensionellen Prüfung des Verbindungselements kombiniert werden.

Vorzugsweise erfasst jede Aufnahmeoptik nur einen Teil der Mantelfläche des Verbindungselements bzw. des Gewindeabschnitts des Verbindungselements. Eine Erfassung der dem Kopf des Verbindungselements abgewandten Endfläche des Schafts ist nicht erforderlich, da hier keine funktionseinschränkenden Beschädigungen auftreten. Vorzugsweise werden also mehrere Aufnahmeoptiken und Kameras eingesetzt. Diese sind vorzugsweise so angeordnet, dass benachbarte Aufnahmeoptiken und Kameras einen sich teilweise überlappenden Teil der Mantelfläche des Verbindungselements überwachen. Dadurch ist eine lückenlose Kontrolle des zu prüfenden Bereichs des Verbindungselements gegeben. Je nach Ausführung und Größe der Aufnahmeoptik können zwei, drei, vorzugsweise vier oder mehr Aufnahmeoptiken und Kameras eingesetzt werden. Da das Verbindungselement zur Überprüfung vorteilhafterweise in der Mitte zwischen den Aufnahmeoptiken angeordnet wird, hat die Anzahl von vier Aufnahmeoptiken den Vorteil, dass das Verbindungselement jeweils zwischen zwei Aufnahmeoptiken hindurch zu- und abgeführt wird. Eine derartige Anordnung ist insbesondere dann bevorzugt, wenn der zu prüfende Teil der Mantelfläche des Verbindungselements nicht an einem Ende des Verbindungselements angeordnet ist.

Durch die nur partielle Abbildung der Mantelfläche auf einzelne Aufnahmeoptiken und Kameras wird eine bessere Auflösung erzielt und die Verzerrung des Gesamtbildes bei der stets mit Toleranzen und Ungenauigkeiten behafteten Positionierung des Verbindungselements reduziert. Zudem kann die Neigung des Strahlengangs relativ zu der Achse des Verbindungselements vergleichsweise einfach verändert werden.

Vorzugsweise werden die Lichtstrahlen im Wesentlichen senkrecht zu einer Flanke des Gewindes im Bereich der Mittelachse des Verbindungselements abgestrahlt. Hierdurch wird erreicht, dass die Abweichung von dem idealen Winkel von 90° in beide radialen Richtungen von der Mittelachse des Verbindungselements aus möglichst gering gehalten werden. Insgesamt hat sich herausgestellt, dass Winkel in einem Bereich von etwa 70° bis etwa 110° zu der Flanke des Gewindes im Bereich der Mittelachse des Verbindungselements zu guten Reflexionsergebnissen führen. Mindestens solche Winkel sind im Sinne der Definition der Erfindung als "im Wesentlichen senkrecht" anzusehen. Weiterhin ist es bevorzugt, die Lichtstrahlen im Wesentlichen senkrecht zu einer solchen Flanke des Gewindes des Verbindungselements abzustrahlen, die in axialer Richtung des Verbindungselements im Bereich der Mitte des zu prüfenden Bereichs liegt.

Die vorliegende Erfindung betrifft die Überprüfung des Gewindes eines Verbindungselements auf Beschädigungen. Es versteht sich, dass die Erfindung auch auf andere gewindeähnliche Profile, wie Wendel- oder Rillenprofile anwendbar ist. In diesem Fall wird die Ausrichtung der Abstrahlung der Lichtstrahlen sowie des Auffangens der reflektierten Lichtstrahlen relativ zu dem der Flanke eines Gewindes entsprechenden Teils des gewindeähnlichen Profils gewählt. Bei einem Wendelprofil handelt es sich dabei um das Wendel, d. h. die radial hervorstehenden Bereiche des Wendelprofils. In diesem Sinne ist der in den Patentansprüchen und der Beschreibung verwendete Begriff eines "Gewindes" in Abweichung von der Allgemeindefinition weiter zu verstehen. Entsprechendes gilt für den Begriff "Flanke". Hierbei kann es sich gemäß der dieser Anmeldung zugrundeliegenden Definition auch um ein Wendel eines Wendelprofils oder eine Wulst eines Rillenprofils handeln.

### KURZBESCHREIBUNG DER FIGUREN

Im Folgenden wird die Erfindung anhand in den Figuren dargestellter bevorzugter Ausführungsbeispiele weiter erläutert und beschrieben.
- **Fig. 1**: zeigt eine Seitenansicht einer ersten beispielhaften Ausführungsform der erfindungsgemäßen Vorrichtung.
- **Fig. 2**: zeigt eine dreidimensionale Seitenansicht der ersten Ausführungsform der erfindungsgemäßen Vorrichtung.
- **Fig. 3**: zeigt eine Seitenansicht einer zweiten beispielhaften Ausführungsform der erfindungsgemäßen Vorrichtung.
- **Fig. 4**: zeigt eine dreidimensionale Seitenansicht der zweiten Ausführungsform der erfindungsgemäßen Vorrichtung.
- **Fig. 5**: zeigt eine Draufsicht auf die zweite Ausführungsform der erfindungsgemäßen Vorrichtung.
- **Fig. 6**: zeigt eine Seitenansicht einer dritten beispielhaften Ausführungsform der erfindungsgemäßen Vorrichtung.
- **Fig.7**: zeigt eine dreidimensionale Seitenansicht der dritten Ausführungsform der erfindungsgemäßen Vorrichtung.
- **Fig. 8**: zeigt eine Draufsicht auf die dritte Ausführungsform der erfindungsgemäßen Vorrichtung.
- **Fig. 9**: eine Seitenansicht einer vierten beispielhaften Ausführungsform der erfindungsgemäßen Vorrichtung.
- **Fig. 10**: zeigt eine dreidimensionale Seitenansicht der vierten Ausführungsform der erfindungsgemäßen Vorrichtung.

### FIGURENBESCHREIBUNG

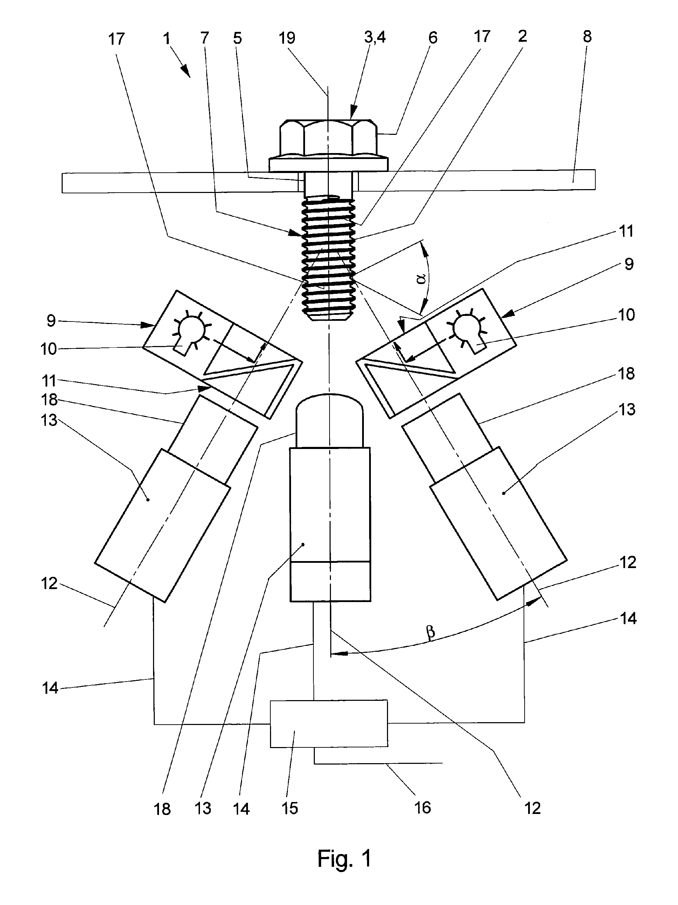

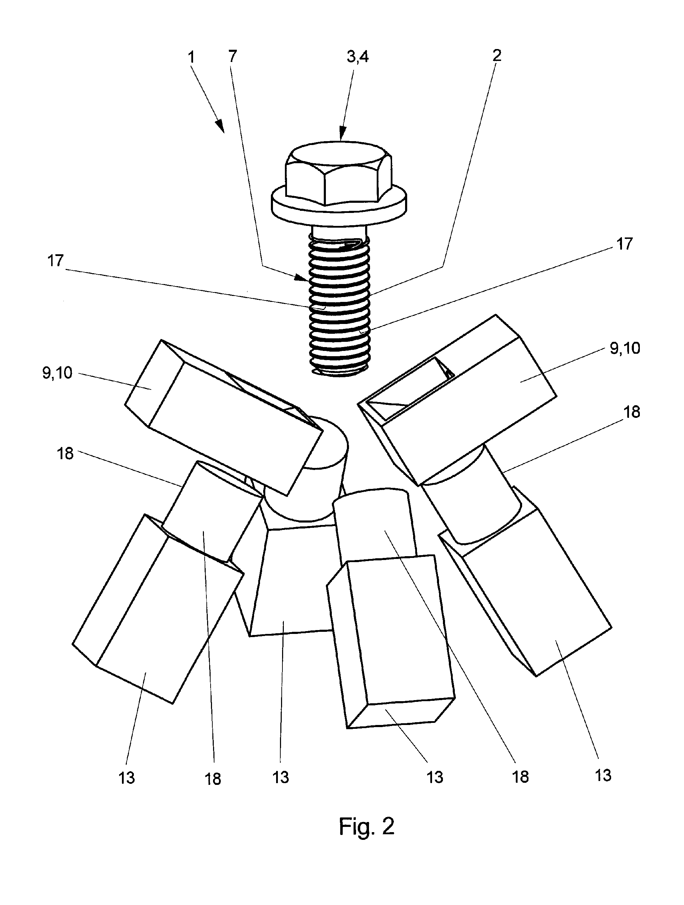

**Fig. 1 und 2** zeigen eine erste Ausführungsform einer neuen Vorrichtung 1 zum Überprüfen eines Gewindes 2 eines Verbindungselements 3 auf Beschädigungen. Im dargestellten Ausführungsbeispiel handelt es sich bei dem Verbindungselement 3 um eine Schraube 4. Die Schraube 4 weist einen Schaft 5, einen an einem Ende des Schafts 5 angeordneten Kopf 6 sowie einen am anderen Ende des Schafts 5 angeordneten Gewindeabschnitt 7 mit dem Gewinde 2 auf. Das Verbindungselement 3 ist in einer Transportvorrichtung 8 aufgenommen. Bei der Transportvorrichtung 8 kann es sich um einen aus dem Stand der Technik bekannten Drehteller oder dergleichen handeln.

Die Vorrichtung 1 weist eine Mehrzahl von Beleuchtungseinrichtungen 9 zum Beleuchten des zu überprüfenden Verbindungselements 3 auf. Im vorliegenden Fall weisen die Beleuchtungseinrichtungen 9 jeweils eine Beleuchtungsvorrichtung 10 sowie einen halbdurchlässigen Spiegel 11 auf. Symmetrisch zu der optischen Achse 12 der Beleuchtungseinrichtung 9 und in Richtung weg von dem Verbindungselement 3 ist ferner jeweils eine Kamera 13 vorgesehen, die über eine Leitung 14 mit einer Auswerteeinheit 15 verbunden ist. Die Auswerteeinheit 15 ist wiederum mit einer Leitung 16 verbunden, über die letztendlich ein Gut-/Schlechtsignal abgegeben wird, wie dies im Weiteren genauer erläutert wird.

Anhand von Fig. 1 - und insbesondere unter Berücksichtigung der räumlichen Anordnung der Vorrichtung 1 gemäß Fig. 2 - ist gut erkennbar, dass die Beleuchtungseinrichtungen 9 sowie die Kameras 13 unter einem bestimmten Winkel relativ zu einer Flanke 17 des Gewindes 2 der Schraube 4 ausgerichtet sind. Hierbei ist letztendlich wesentlich, wie die Ausrichtung der Auffangoptik 18 der Kameras 13 gewählt ist. Es versteht sich, dass z.B. die Anordnung des Gehäuses der Kameras 13 von vergleichsweise untergeordneter Bedeutung ist.

Erfindungsgemäß ist die optische Achse 12 der Beleuchtungseinrichtung 9 derart relativ zu einer Flanke 17 des Gewindes 2 des Verbindungselements 3 angeordnet, dass die Lichtstrahlen im Wesentlichen senkrecht zu der Flanke 17 des Gewindes 2 abgestrahlt werden. In dem vorliegenden Ausführungsbeispiel wird dies mittels des halbdurchlässigen Spiegels 11 realisiert, der die von der Beleuchtungsvorrichtung 10 abgestrahlten Lichtstrahlen in Richtung der optischen Achse 12 und somit senkrecht auf die Flanke 17 des Gewindes 2 abstrahlt. Aufgrund seiner halbdurchlässigen Eigenschaften ermöglicht es der halbdurchlässige Spiegel 11, dass die senkrecht auf die Flanke 17 abgestrahlten Lichtstrahlen, die wiederum in der gleichen Richtung von der Flanke 17 reflektiert werden, in den Bereich der Auffangoptik 18 der Kamera 13 gelangen. Aufgrund dieser Relativanordnung ist es möglich, Beschädigungen der Flanke 17 des Gewindes 2 des Verbindungselements 3 besonders gut festzustellen. Wenn eine derartige Beschädigung vorliegt, werden die von der beschädigten Fläche reflektierten Lichtstrahlen vornehmlich nicht in den Bereich der Auffangoptik 18 reflektiert. Derartige Bereiche sind somit als schwarze Flächen auf dem von der Kamera 13 erzeugten Bild zu erkennen. Intakte Flanken 17 hingegen reflektieren die Lichtstrahlen durch den halbdurchlässigen Spiegel 11 in die Auffangoptik 18 und den entsprechenden CCD-Chip oder dergleichen der Kamera 13, so dass solche Bereiche einen relativ hohen Helligkeitswert besitzen und als helle Flächen auf der Abbildung zu erkennen sind.

Bei metrischen Gewinden mit einem Flankenwinkel von 60° (Winkel α in Fig. 1) ergibt sich somit ein optimaler Einstrahlwinkel von 30° (Winkel β in Fig. 1) von der Mittelachse des Verbindungselements aus.

Die Beleuchtungseinrichtungen 9, die Auffangoptiken 18 und die Kameras 13 sind dabei derart räumlich angeordnet (siehe Fig. 2), dass der gesamte Bereich des Gewindes 2 auf Beschädigungen überprüft werden kann, wobei jede der zuvor beschriebenen Einheiten einen Teilbereich des Gewindes 2 abdeckt und sich die Teilbereiche für eine vollständige Überprüfung des Gewindes 2 vorzugsweise überlappen. Diese separaten Abbildungen werden über die Leitungen 14 an die Auswerteeinheit 15 gesendet, die anhand bestimmter Algorithmen und der Helligkeitswerte bzw. des Kontrasts der Abbildungen eine Unterscheidung in Gut- oder Schlechtteile vornimmt. Dieses dieser Entscheidung entsprechende Signal wird schließlich über eine Leitung 16 abgegeben und in geeigneter Weise weiterverarbeitet, so dass eine Trennung der Gutteile von den Schlechtteilen der Verbindungselemente 3 stattfinden kann.

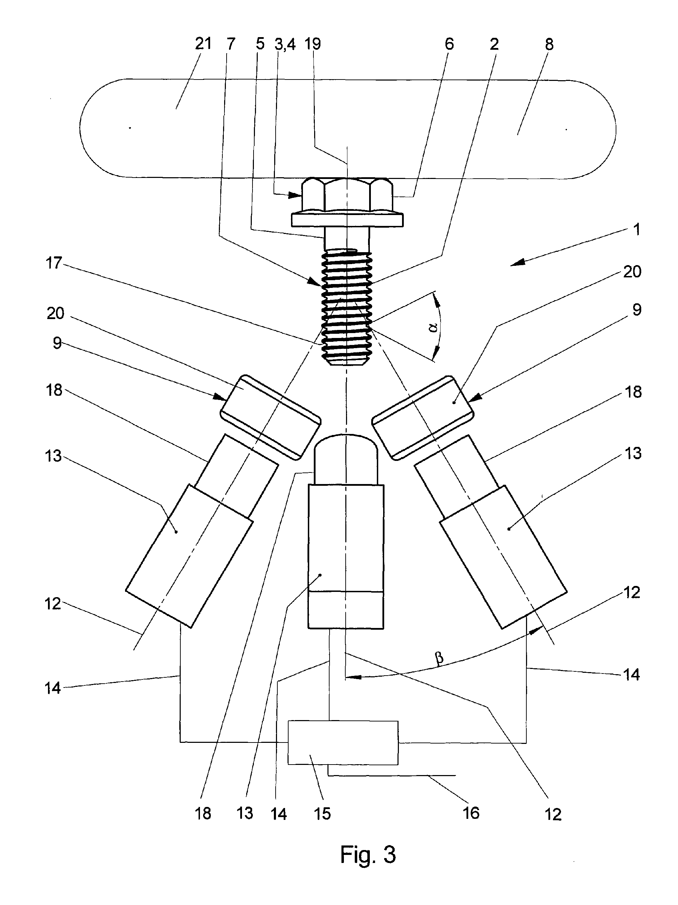

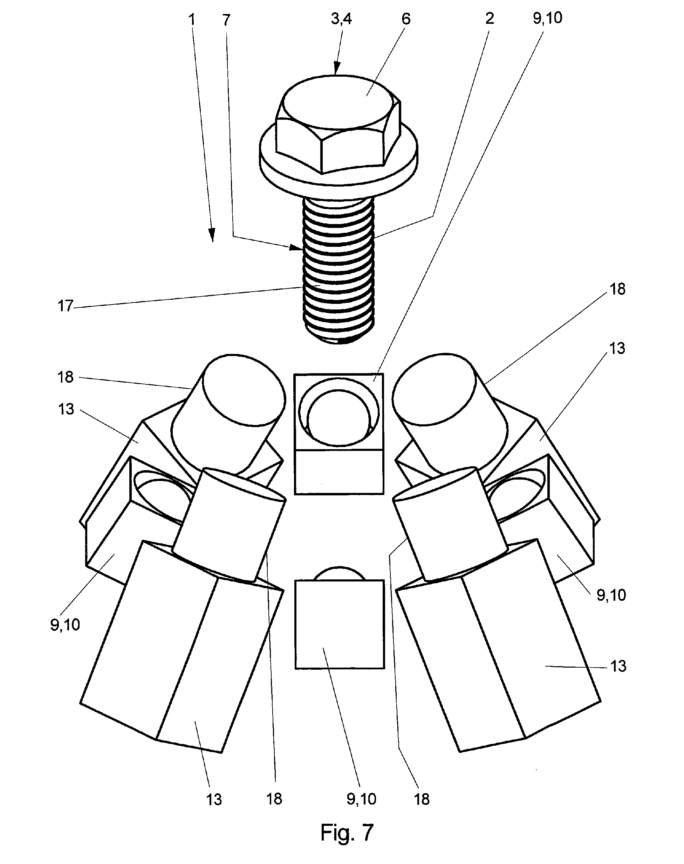

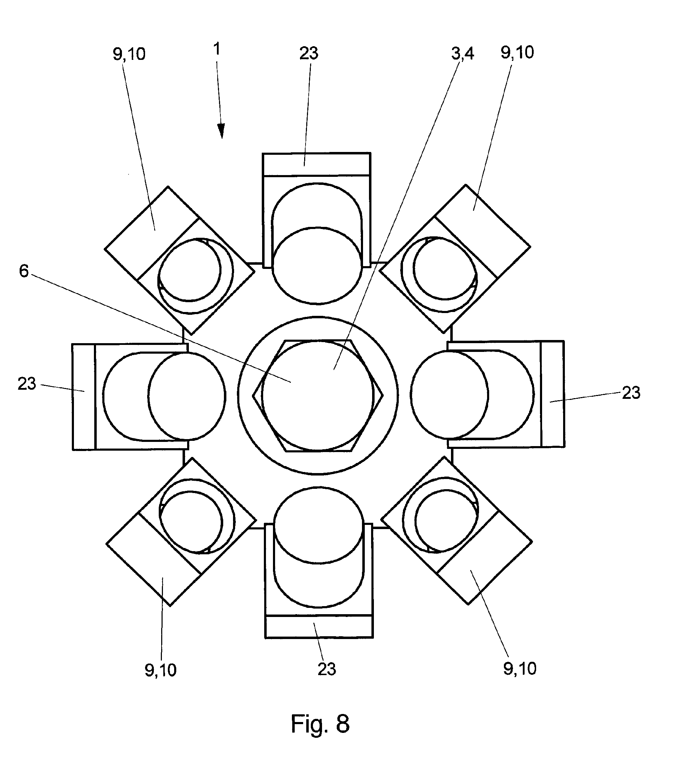

Im Übrigen sei noch darauf hingewiesen, dass die Darstellung der Fig. 1 so gewählt ist, dass sich die im Bereich der Mittelachse 19 angeordneten zwei Kameras 13 in der Darstellung derart überdecken, dass nur die vordere der beiden Kameras 13 zu sehen ist. Aus Übersichtlichkeitsgründen wurde bei diesen Kameras 13 zudem die Beleuchtungseinrichtung 9 nicht dargestellt. Es versteht sich, dass diese genauso Beleuchtungseinrichtungen wie bei den beiden anderen in Fig. 1 dargestellten Kameras 13 bzw. Beleuchtungseinrichtungen 9 vorhanden ist. Vergleichbares gilt für Fig. 3-10.

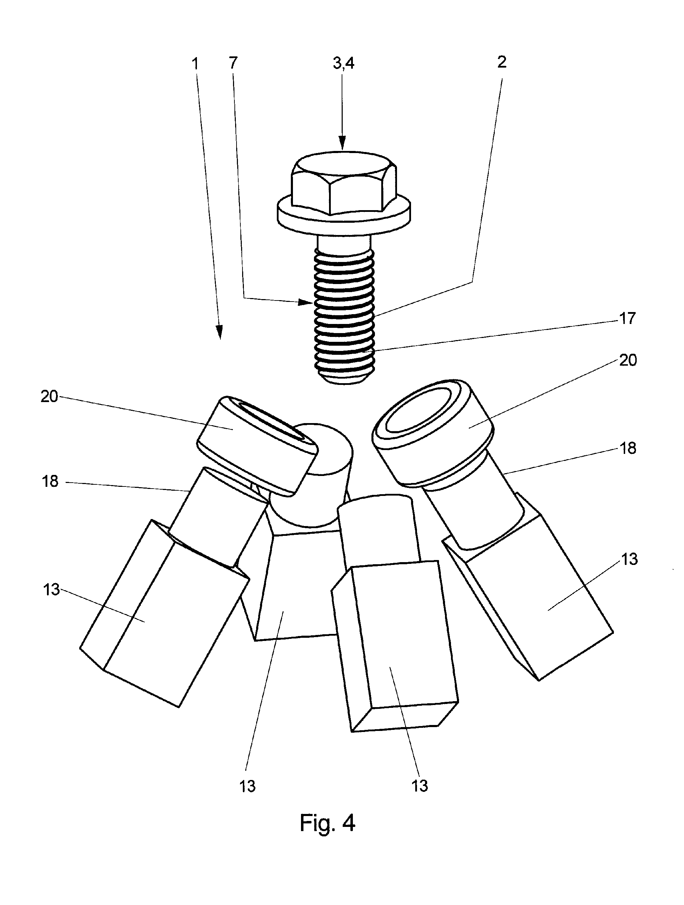

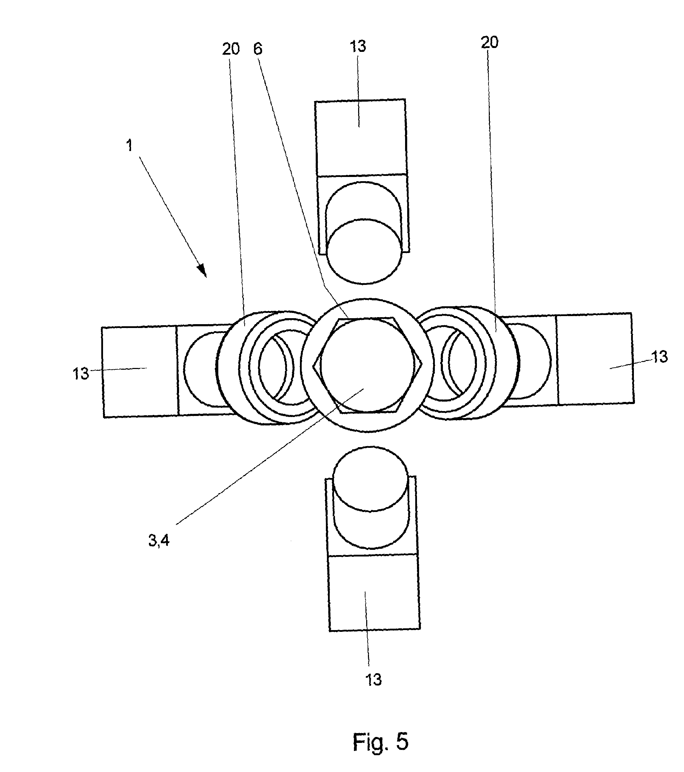

**Fig. 3** zeigt eine ähnliche Darstellung wie Fig. 1. Anstelle eines halbdurchlässigen Spiegels weist die Beleuchtungseinrichtung 9 in dieser Ausführungsform eine ringförmige Beleuchtungsvorrichtung 20 auf. Auch diese strahlt die Lichtstrahlen vornehmlich in Richtung der optischen Achse 12 und etwa senkrecht auf die Flanke 17 des Gewindes 2 des Verbindungselements 3 ab. Weiterhin ist beispielhaft eine andere Transportvorrichtung 8 dargestellt. In diesem Fall handelt es sich bei der Transportvorrichtung 8 um ein Magnetband 21. Weitere Details sind in den Fig. 4, 5 erkennbar.

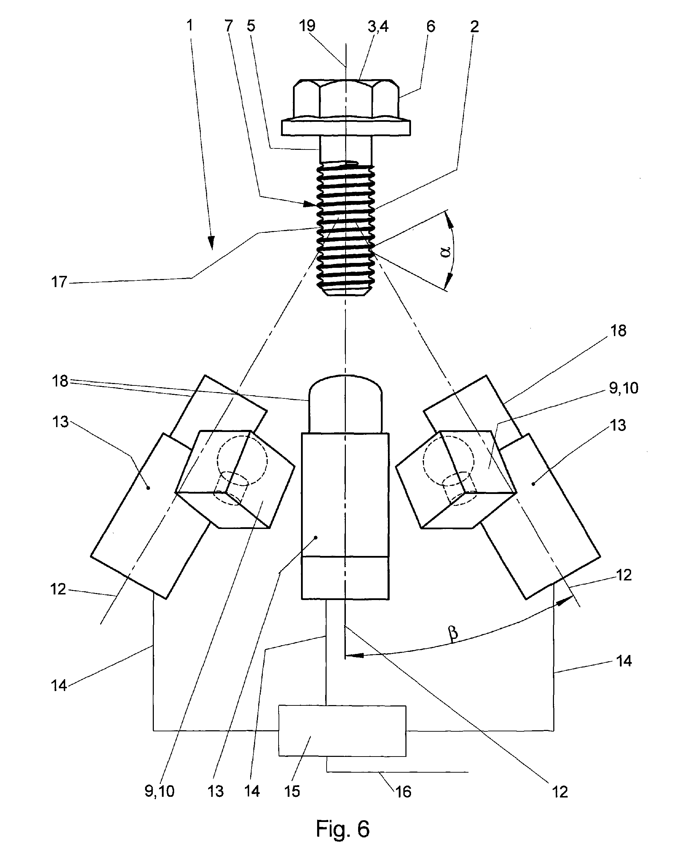

**Fig. 6-8** zeigen eine weitere Ausführungsform der Vorrichtung 1 zum Durchführen des erfindungsgemäßen Verfahrens zum Überprüfen eines Gewindes 2 eines Verbindungselements 3 auf Beschädigungen. In diesem Fall sind die Beleuchtungseinrichtungen 9 als separate, abgeschirmte Beleuchtungsvorrichtungen 10 ausgebildet, die ihr Licht ebenfalls im Wesentlichen senkrecht zu der Flanke 17 des Gewindes 2 der Schraube 4 abstrahlen. Der Vorteil dieser Anordnung liegt in der Verwendbarkeit vergleichsweise einfacher und damit preiswerterer Beleuchtungseinrichtungen 9.

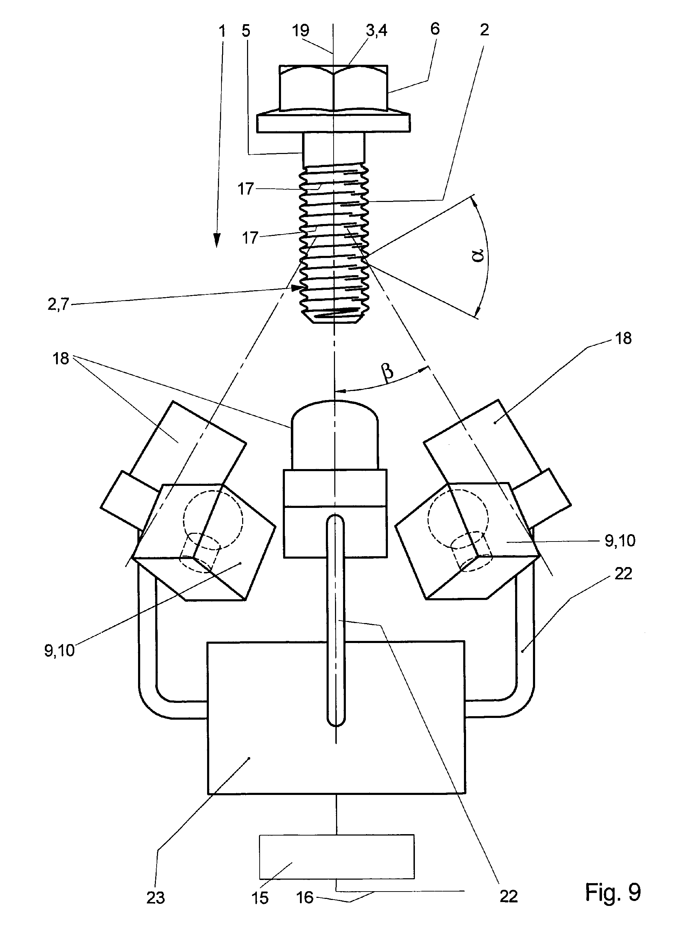

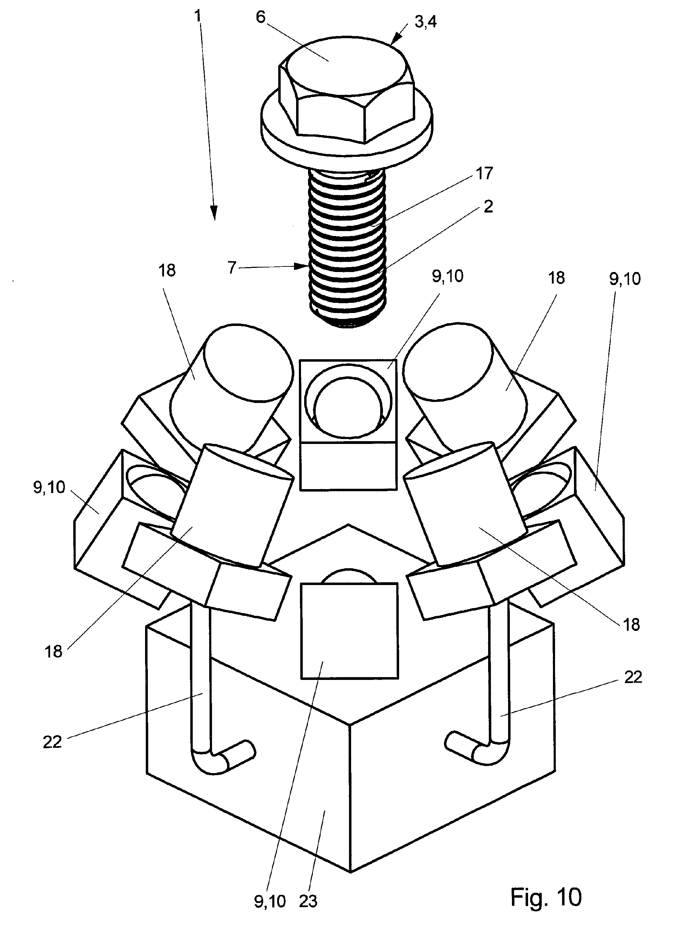

Fig. 9, 10 zeigen schließlich eine weitere Ausführungsform der Vorrichtung 1. In diesem Fall sind die Auffangoptiken 18 nicht integraler Bestandteil einer Kamera, sondern über Übertragungsoptiken 22 mit einer einzelnen separaten Kamera 23 verbunden. Dies hat den Vorteil, dass die relativ kleinen Auffangoptiken 18 benachbart zu dem Verbindungselement 3 angeordnet werden, während die vergleichsweise größere Kamera 23 außerhalb des möglichen Kollisionsbereichs mit dem Verbindungselement 3 angeordnet sein kann.

### BEVORZUGTE KONKRETE AUSFÜHRUNGSFORM

Folgende Komponenten der Vorrichtung haben sich bei der Umsetzung der Erfindung als gut verwendbar herausgestellt:

| | |
|---|---|
| Beleuchtungseinrichtung und Beleuchtungsvorrichtung | Diffuse Hellfeldbeleuchtung mit Spiegel F150 RV=DOAL50W der Firma Omron; oder Leuchte 11W 0.0.417.06 der Firma item; oder ringförmige Beleuchtung Typ A08630 inklusive VLP Intralux DC-1100 der Firma Otto |
| Auffangoptik | Pentax 16mm; 1:1,4 |
| Kamera | Pulnix TM 6702 der Firma Otto; oder F150-S1A der Firma Omron |
| Auswerteeinheit | CVS300 der Firma Otto; oder F150-C15E-3 der Firma Omron |
| Transportvorrichtung | Permanentmagnetischer Schraubenförderer nach Zeichnung 390.0368.0000.0000 der Firma NSM |

### BEZUGSZEICHENLISTE

- 1: Vorrichtung
- 2: Gewinde
- 3: Verbindungselement
- 4: Schraube
- 5: Schaft
- 6: Kopf
- 7: Gewindeabschnitt
- 8: Transportvorrichtung
- 9: Beleuchtungseinrichtung
- 10: Beleuchtungsvorrichtung
- 11: halbdurchlässiger Spiegel
- 12: optische Achse
- 13: Kamera
- 14: Leitung
- 15: Auswerteeinheit
- 16: Leitung
- 17: Flanke
- 18: Auffangoptik
- 19: Mittelachse
- 20: ringförmige Beleuchtungsvorrichtung
- 21: Magnetband
- 22: Übertragungsoptik
- 23: Kamera

## Patentansprüche

1. Verfahren zum Überprüfen eines Gewindes eines Verbindungselements auf Beschädigungen, mit den Schritten:
Abstrahlen von Lichtstrahlen auf das Gewinde (2) derart, dass diese im Wesentlichen senkrecht zu einer Flanke (17) des Gewindes (2) verlaufen; und
Auffangen der von der Flanke (17) des Gewindes (2) reflektierten Lichtstrahlen im Wesentlichen senkrecht zu der Flanke (17) des Gewindes (2) mit mindestens einer Auffangoptik (18), deren optische Achse (12) im Wesentlichen senkrecht zu der Flanke (17) des Gewindes (2) ausgerichtet ist.

2. Verfahren nach Anspruch 1, **dadurch gekennzeichnet, dass** die Lichtstrahlen im Wesentlichen senkrecht zu einer Flanke (17) des Gewindes (2) im Bereich der Mittelachse (19) des Verbindungselements (3) abgestrahlt werden.

3. Verfahren nach Anspruch 1 oder 2, **dadurch gekennzeichnet, dass** die Lichtstrahlen unter einem Winkel von etwa 90° zu einer Flanke (17) des Gewindes (2) im Bereich der Mittelachse (19) des Verbindungselements (3) abgestrahlt werden.

4. Verfahren nach einem der Ansprüche 1 bis 3, **dadurch gekennzeichnet, dass** die aufgefangenen reflektierten Lichtstrahlen mit mindestens einer Kamera (23) aufgenommen werden.

5. Verfahren nach Anspruch 4, **dadurch gekennzeichnet, dass** die optische Achse (12) der mindestens einen Kamera (23) im Wesentlichen senkrecht zu einer Flanke (17) des Gewindes (2) ausgerichtet ist.

6. Verfahren nach mindestens einem der Ansprüche 1 bis 5, **dadurch gekennzeichnet, dass** die aufgefangenen reflektierten Lichtstrahlen mit einer Mehrzahl von Kameras (23) aufgenommen werden, wobei jede der Kameras (23) einen Teilbereich des Verbindungselements (3) aufnimmt und sich diese Teilbereiche überlappen.

7. Verfahren nach mindestens einem der Ansprüche 1 bis 6, **dadurch gekennzeichnet, dass** beschädigte Bereiche des Verbindungselements (3) anhand ihres im Vergleich zu unbeschädigten Bereichen geringeren Helligkeitswerts erkannt werden.

8. Verfahren nach mindestens einem der Ansprüche 1 bis 7, **dadurch gekennzeichnet, dass** ausschließlich das Gewinde (2) des Verbindungselements (3) betrachtet wird.

9. Vorrichtung zum Überprüfen eines Gewindes eines Verbindungselements auf Beschädigungen, mit
mindestens einer Beleuchtungseinrichtung (9) zum Beleuchten des zu überprüfenden Verbindungselements (3), wobei die Beleuchtungseinrichtung (9) derart relativ zu dem Verbindungselement (3) ausgerichtet ist, dass die Lichtstrahlen im Wesentlichen senkrecht zu einer Flanke (17) des Gewindes (2) abgestrahlt werden; und
mindestens einer Auffangoptik (18) zum Auffangen der von der Flanke (17) des Gewindes (2) reflektierten Lichtstrahlen, wobei die optische Achse (12) der Auffangoptik (18) im Wesentlichen senkrecht zu der Flanke (17) des Gewindes (2) und die Auffangoptik (18) derart relativ zu dem Verbindungselement (3) ausgerichtet ist, dass im Wesentlichen die senkrecht zu der Flanke (17) des Gewindes (2) reflektierten Lichtstrahlen aufgefangen werden.

10. Vorrichtung nach Anspruch 9, **dadurch gekennzeichnet, dass** die Beleuchtungseinrichtung (9) einen halbdurchlässigen Spiegel (11) mit einer Beleuchtungsvorrichtung (10) aufweist.

11. Vorrichtung nach Anspruch 9, **dadurch gekennzeichnet, dass** die Beleuchtungseinrichtung (9) eine ringförmige Beleuchtungsvorrichtung (10) aufweist.

12. Vorrichtung nach einem der Ansprüche 9 bis 11, **dadurch gekennzeichnet, dass** eine Mehrzahl von Beleuchtungseinrichtungen (9) und Auffangoptiken (18) vorgesehen ist, wobei diese derart ausgebildet und angeordnet sind, dass sie jeweils einen Teilbereich des Verbindungselements (3) aufnehmen und sich diese Teilbereiche überlappen.

13. Vorrichtung nach einem der Ansprüche 9 bis 12, **dadurch gekennzeichnet, dass** den Auffangoptiken (18) mindestens eine Kamera (23) zugeordnet ist.

14. Vorrichtung nach einem der Ansprüche 9 bis 12, **dadurch gekennzeichnet, dass** jeder der Auffangoptiken (18) genau eine Kamera (23) zugeordnet ist.

15. Vorrichtung nach einem der Ansprüche 9 bis 14, **dadurch gekennzeichnet, dass** mindestens eine Auswerteeinheit (15) vorgesehen ist, die zum Erkennen von beschädigten Bereichen des Gewindes (2) des Verbindungselements (3) anhand des im Vergleich zu unbeschädigten Bereichen geringeren Helligkeitswerts ausgebildet ist.
